# EUROPÄISCHE PATENTSCHRIFT

(11) **EP 1 736 022 B1**
(45) Veröffentlichungstag und Bekanntmachung des Hinweises auf die Patenterteilung: **30.05.2012**
(21) Anmeldenummer: 05716774.4
(22) Anmeldetag: 23.02.2005
(51) Int. Cl.: H04W 64/00

(54) **Mobiles Endgerät zum Empfang paketorientierter Rundfunksignale**
Mobile terminal for receiving packet-oriented radio signals
Terminal mobile pour la réception des signaux radio transmis par paquets

(30) Priorität: 14.04.2004 DE 102004018162
(43) Veröffentlichungstag der Anmeldung: 27.12.2006
(73) Patentinhaber: SIEMENS AKTIENGESELLSCHAFT, 80333 München (DE)
(72) Erfinder: BÄR, Siegfried, 85716 Unterschleissheim (DE); SURANTYN, Yves, 80798 München (DE)
(86) Internationale Anmeldenummer: PCT/EP2005/050773
(87) Internationale Veröffentlichungsnummer: WO 2005/101881

(56) Entgegenhaltungen:
- EP-A- 0 804 012
- WO-A-99/33076
- WO-A-02/063865
- WO-A-2004/102970
- US-B1- 6 397 065

## Beschreibung

Die vorliegende Erfindung betrifft ein mobiles Endgerät, insbesondere ein Mobilfunkgerät, für ein Mobilfunksystem bzw. ein Verfahren zur Kommunikation in einem Mobilfunksystem und zum Empfang paketorientierter Rundfunksignale in einem mobilen Endgerät. Des Weiteren betrifft die Erfindung ein Netzwerk in einem Mobilfunksystem.

Mobile Endgeräte bzw. Verfahren zur Kommunikation in einem Mobilfunksystem und zum Empfang paketorientierter Rundfunksignale in einem mobilen Endgerät finden unter Anderem in Mobilfunkgeräten der dritten Generation Anwendung.

Mobile Endgeräte, welche beispielsweise nach dem GSM (Global System for Mobile Communications) oder UMTS (Universal Mobile Communications System) -Standard betrieben werden, sind in zunehmendem Maße nicht mehr ausschließlich für die Sprachtelephonie ausgelegt. So besteht bei Nutzern solcher mobiler Endgeräte der Wunsch, weitere Übertragungskanäle, wie beispielsweise paketorientierte Rundfunksignale, mit Hilfe des mobilen Endgerätes empfangen zu können. Bei Mobilfunkgeräten der dritten Generation, wie beispielsweise nach dem UMTS-Standard arbeitenden Mobilfunkgeräten, sind Übertragungen mit hohen Datenraten, beispielsweise sogenannte "Videostreams", standardmäßig vorgesehen. Allerdings ergeben sich dabei zwei grundsätzliche Probleme. Zum Einen entstehen für den Nutzer hohe Übertragungskosten, zum Anderen gibt es Kapazitätsengpässe, wenn beispielsweise zu viele Nutzer innerhalb einer UMTS-Funkzelle Videostreams abrufen.

Bislang sind als Prototypen Mobilfunkgeräte bekannt, die zusätzlich einen Empfang von DAB- (Digital Audio Broadcast) oder DVB-T (Digital Video Broadcast-Terrestrial) Signalen ermöglichen. Bei diesen Prototypen handelt es sich um ein bekanntes Mobilfunkgerät, welches zusätzlich einen kompletten eigenständigen DAB- bzw. DVB-T-Empfänger besitzt. Dabei werden nur Tastatur, Display und Lautsprecher von beiden Systemen gemeinsam benutzt. In diesem Fall kann das Mobilfunkgerät während des Empfangs der DAB- bzw. DVB-T-Signale gleichzeitig mit dem Mobilfunk-Empfänger ständig das Mobilfunknetz überwachen, d.h. beispielsweise den Paging-Kanal lesen, nach neuen Zellen suchen oder ein sogenanntes "Location Update", d.h. eine Aktualisierung des Aufenthaltsortes des mobilen Endgerätes, durchführen. Solche Geräte haben jedoch den Nachteil, dass sie größer als bekannte Mobilfunkgeräte dimensioniert werden müssen, ein höheres Gewicht aufweisen und ein höherer Energieverbrauch anfällt, welcher die Betriebsdauer des Mobilfunkgeräts reduziert.

Um Kosten, Gewicht und Energieverbrauch zu reduzieren, ist es vorstellbar, Teile der Hardware des Mobilfunkgeräts von beiden Systemen benutzen zu lassen. Dennoch ist es dabei notwendig, dass zwischen dem Mobilfunkgerät und dem Mobilfunknetzwerk ständig eine Verbindung besteht, damit jederzeit ein eingehender Anruf an das richtige Mobilfunkgerät geleitet werden kann. Zur Vereinfachung der Weiterleitung gibt es die Funktion des "Location Update". Dabei teilt das Mobiltelefon mit einem Location Update dem Netzwerk mit, in welcher Zelle innerhalb der sogenannte "Location Area" es sich befindet. Bei der Location Area handelt es sich um die logische Zusammenfassung mehrerer benachbarter Zellen innerhalb des gleichen Netzanbieters. Innerhalb einer Location Area kann sich der Nutzer des Mobilfunkgeräts frei bewegen. Ein Location Update findet zum Einen statt, wenn das Telefon die aktuelle Location Area verlässt und eine neue betritt, oder immer nach einer vom Netzbetreiber vorgegebenen Zeit. Die zweite Alternative ist auch als sogenanntes "Periodic Location Update" bekannt.

Nachteilig bei einer Ausführung des Mobilfunkgeräts mit gemeinsam benutzbaren Hardware-Bauteilen ist jedoch, dass das Mobilfunkgerät den Empfang der DAB-/DVB-Signale unterbrechen muss, um Messungen im Mobilfunksystem durchzuführen, welche für das Location Update notwendig sind. Dies hat zur Folge, dass Unterbrechungen der Video- und/oder Audiowiedergabe deutlich wahrnehmbar sind und unter Umständen mehrere Sekunden dauern können.

Aus dem Dokument WO 2004/102970 A1 ist eine Methode zur Übertragung digitaler Daten von und zu einem mobilen Endgerät bekannt, wobei eine Identifikation der Position des mobilen Endgeräts stattfindet.

Aus dem Dokument WO 99/33076 A1 ist eine Methode zur Übertragung von Information von einem Informationsanbieter zu einem Informationskonsumenten unter Verwendung eines digitalen Video-Broadcasting-Systems und eines zweiten bidirektionalen Übertragungsnetzwerks bekannt.

Somit ist eine Aufgabe der vorliegenden Erfindung, ein mobiles Endgerät und ein Verfahren der eingangs genannten Art bereitzustellen, welche ein Location Update ohne eine wesentliche Beeinträchtigung beim Empfang paketorientierter Rundfunksignale ermöglichen.

Diese Aufgabe wird durch das mobile Endgerät mit den Merkmalen des Anspruchs 1, das Verfahren mit den Merkmalen des Anspruchs 8 und das Netzwerk mit den Merkmalen des Anspruch 15 gelöst. Vorteilhafte Weiterbildungen der Erfindung ergeben sich aus den abhängigen Ansprüchen.

Das erfindungsgemäße mobile Endgerät, insbesondere Mobilfunkgerät für ein Mobilfunksystem, weist Mittel zur Kommunikation in dem Mobilfunksystem, und Mittel zum Empfang paketorientierter Rundfunksignale auf, wobei das mobile Endgerät dafür ausgelegt ist, eine erste Zellidentifikationsnummer von einem ersten Sender paketorientierter Rundfunksignale zu empfangen und diese erste Zellidentifikationsnummer an das Netzwerk des Mobilfunksystems für eine Aktualisierung des Aufenthaltsortes des mobilen Endgerätes innerhalb des Netzwerks des Mobilfunksystems zu übermitteln.

Bei dem erfindungsgemäßen Verfahren zur Kommunikation in einem Mobilfunksystem und zum Empfang paketorientierter Rundfunksignale in einem mobilen Endgerät, insbesondere in einem Mobilfunkgerät, welches in dem Mobilfunksystem kommuniziert, wird eine erste Zellidentifikationsnummer von einem ersten Sender paketorientierter Rundfunksignale empfangen, und diese erste Zellidentifikationsnummer an das Netzwerk des Mobilfunksystems für eine Aktualisierung des Aufenthaltsortes des mobilen Endgerätes innerhalb des Netzwerks des Mobilfunksystems übermittelt.

Bei dem erfindungsgemäßen mobilen Endgerät kann es sich um jede Art von Endgerät handeln, welches in einem Mobilfunksystem Kommunikation ermöglicht und darüber hinaus paketorientierte Rundfunksignale empfangen kann. Bevorzugt handelt es sich dabei um ein Mobilfunkgerät, ein sogenanntes "Smart Phone" oder ein "Personal Digital Assistent" (PDA). Hinsichtlich der zu verwendenden Mobilfunkstandards ist die Erfindung auf keine Technologie beschränkt.

Bei dem paketorientierten Rundfunksignal werden die zu übertragenden Informationsinhalte in digitale Datenpakete codiert und mit Hilfe von Rundfunksignalen an alle in dem Sendegebiet befindlichen Empfänger gesendet. Beispielsweise handelt es sich bei dem paketorientierten Rundfunksignal um ein sogenanntes DVB-Signal. DVB (Digital Video Broadcasting) ist ein digitaler Video-Übertragungs-Standard, welcher mit Hilfe von Rundfunksignalen verbreitet wird. Es gibt dabei unter Anderem eine terrestrische Variante DVB-T und eine auf mobile Endgeräte abgestimmte Variante DVB-H. Die DVB-H-Variante ist für geringeren Energieverbrauch beim Signalempfang als die DVB-T-Variante ausgelegt, so dass sich die DVB-H-Variante bevorzugt für den Einsatz in mobilen Endgeräten eignet. Bei dem paketorientierten Rundfunksignal kann es sich aber auch um ein DAB- (Digital Audio Broadcast) Signal handeln.

Die Mittel zum Empfang paketorientierter Rundfunksigale ermöglichen einen entsprechenden Empfang solcher DVB- oder DAB-Signale.

Die Mittel zur Kommunikation in einem Mobilfunksystem ermöglichen eine Kommunikation eines mobilen Endgerätes in einem Mobilfunksystem mit weiteren mobilen Endgeräten. Eine solche Kommunikation kann beispielsweise über den GSM- oder UMTS-Standard erfolgen. Bei den Mitteln zur Kommunikation in einem Mobilfunksystem kann es sich bevorzugt um Mittel zum Empfang von Telefonanrufen und/oder Mittel zum Empfang von Kommunikationsdaten handeln. Denkbar ist, dass durch die Mittel zur Kommunikation in einem Mobilfunksystem eine Sprachkommunikation und/oder eine reine Datenkommunikation, wie beispielsweise über SMS- (Short Message Service) Nachrichten oder E-mail, zwischen mindestens zwei mobilen Endgeräten ermöglicht wird.

Ferner ist das mobile Endgerät geeignet, während des Empfangs paketorientierter Rundfunksignale eine Aktualisierung des Aufenthaltsortes des mobilen Endgeräts innerhalb des Netzwerks des Mobilfunksystems ausschließlich über ausgesendete Zellidentifikationsnummern zu signalisieren. Dies hat den Vorteil, dass das mobile Endgerät keine Messungen durchführen muss, um die aktuelle Aufenthaltszelle innerhalb des Mobilfunksystems zu bestimmen. Dadurch muss der Empfang der paketorientierten Rundfunksignale nicht unterbrochen werden. Die Zeitdauer des vorstehend erwähnten Sendens der Zellidentifikationsnummer in mindestens einem Zeitschlitz ist in diesem Fall für den Empfang der paketorientierten Rundfunksignale vernachlässigbar.

Bevorzugt handelt es sich bei der Zellidentifikationsnummer um eine sogenannte "Cell-ID" (Cell Idenfication), welche bei DVB-Signalen von einem DVB-Sender übertragen wird. Die Zellidentifikationsnummer muss den Sender der paketorientierten Rundfunksignalen eindeutig identifizieren.

Bei der Aktualisierung des Aufenthaltsortes des mobilen Endgerätes handelt es sich bevorzugt um die eingangs beschriebene Location Update-Prozedur.

In einer Weiterbildung der Erfindung ist das mobile Endgerät geeignet, an das Netzwerk des Mobilfunksystems zusammen mit der Zellidentifikationsnummer eine Protokoll-Nachricht zu übermitteln, welche dem Netzwerk anzeigt, dass das mobile Endgerät gerade mindestens ein paketorientiertes Rundfunksignal empfängt. Dem Netzwerk wird folglich zusammen mit der Zellidentifikationsnummer mitgeteilt, dass sich das mobile Endgerät ab sofort in einem Modus befindet, in welchem es paketorientierte Rundfunksignale empfängt. Somit erfolgt die Aktualisierung des Aufenthaltsortes des mobilen Endgerätes mit Hilfe des erfindungsgemäßen Verfahrens.

Bevorzugt ist das mobile Endgerät geeignet, eine zweite Zellidentifikationsnummer von einem zweiten Sender paketorientierter Rundfunksignale zu empfangen und diese zweite Identifikationsnummer an das Netzwerk des Mobilfunksystems für eine Aktualisierung des Aufenthaltsortes des mobilen Endgerätes zu senden. Durch die Netzplanung des Mobilfunksystems und des Rundfunknetzes zum Senden paketorientierter Rundfunksignale ist es dem Netzwerk bekannt, welcher Sender paketorientierter Rundfunksignale welches Gebiet räumlich versorgt. Somit können in einem zellularen Mobilfunksystem die Mobilfunkzellen einer mit paketorientierten Rundfunksignalen versorgten Zelle eindeutig zugeordnet werden.

Bewegt sich das mobile Endgerät beispielsweise von einer Zelle, welche von einem ersten Sender paketorientierter Rundfunksignale versorgt wird, zu einer zweiten Zelle, welche von einem zweiten Sender paketorientierter Rundfunksignale versorgt wird, so signalisiert das mobile Endgerät dem Netzwerk die zweite Zellidentifikationsnummer, welche den zweiten Sender der paketorientierten Rundfunksignale eindeutig identifiziert. Folglich kommt es bei dem Wechsel von der ersten Zelle zu der zweiten Zelle zu einer Handover-Prozedur. Somit ist im Netzwerk die Position des Mobilfunkgerätes über die jeweilige Sendezelle der paketorientierten Rundfunksignale bekannt. Das mobile Endgerät erkennt durch den Empfang der zweiten Zellidentifikationsnummer, dass es sich in einer anderen Zelle befindet. Es kann somit eine Verbindung zu dem Netzwerk des Mobilfunksystems herstellen und diese geänderte Information an das Netzwerk senden. Diese Verbindung kann dabei kurz gehalten werden. Somit entfallen für das mobile Endgerät Messungen, um die aktuelle Aufenthaltszelle innerhalb des Mobilfunknetzes zu bestimmen.

Der Empfang paketorientierter Rundfunksignale muss nur für einen so kurzen Zeitraum unterbrochen werden, der notwendig ist, um eine Nachricht an das Mobilfunknetzwerk zu senden. Dabei wird u.a. eine Synchronisationsinformation gesendet. Diese Unterberchung führt zu keinen gravierenden negativen Auswirkungen für die Wiedergabe des Audio-/Videosignals. Die Aktualisierung des Aufenthaltsortes des mobilen Endgerätes, das heißt insbesondere das Location Update, kann folglich beim Empfang paketorientierter Rundfunksignale über die Zellidentifikationsnummern erfolgen.

In einer Weiterbildung der Erfindung ist das mobile Endgerät geeignet, während mindestens eines Zeitschlitzes, während dessen keine paketorientierten Rundfunksignale empfangen werden, die zweite Zellidentifikationsnummer an das Netzwerk des Mobilfunksystems zu senden. Denkbar ist auch, dass mehrere Zeitschlitze für diese Signalisierung verwendet werden. Der Empfang paketorientierter Rundfunksignale muss nur für ein so langes Zeitintervall unterbrochen werden, das notwendig ist, um eine entsprechende Nachricht mit der Zellidentifikationsnummer an das Mobilfunknetzwerk zu senden.

Bevorzugt ist das mobile Endgerät des Weiteren geeignet, die erste und/oder die zweite Zellidentifikationsnummer zusammen mit den Empfangsparametern für die paketorientierten Rundfunksignale zu empfangen. Bei einem DVB-T-Signal werden beispielsweise zuerst die gesendeten DVB-T-Kontrollinformationen von dem mobilen Endgerät empfangen, um die Empfangsparameter wie Modulationsart oder Codierung, zu bestimmen. Solche Empfangsparameter werden bevorzugt zusammen mit der zellidentifikationsnummer von dem mobilen Endgerät empfangen.

In einer weiteren bevorzugten Ausführungsform der Erfindung weist das mobile Endgerät nur eine Mobilfunk-Sende-/Empfangsvorrichtung für die Mittel zur Kommunikation in einem Mobilfunksystem und die Mittel zum Empfang paketorientierter Rundfunksignale auf. Das mobile Endgerät benötigt für den Empfang der paketorientierten Rundfunksignale und Telefonanrufe bzw. Kommunikationsdaten nur eine Empfangseinheit bzw. nur ein Sende-/ Empfangsmodul, d.h. nur ein sogenanntes "Transceiver-Modul", welches die notwendigen Bauelemente wie Empfänger, Modem etc. aufweist. Ein solches Transceiver-Modul muss dabei lediglich zu den beiden Systemen kompatibel sein und des Weiteren von einer Frequenz auf eine andere abgestimmt werden können. Die Vorsehung eines Transceiver-Moduls hat gegenüber einer Ausführungsform mit zwei Transceiver-Modulen Vorteile hinsichtlich Größe, Leistungsverbrauch und Kosten, was insbesondere bei für den Massenmarkt entwickelten mobilen Endgeräten entscheidende Vorteile liefert.

Ein Verlust an Datenrate bei dem Empfang der paketorientierten Rundfunksignale fällt nicht ins Gewicht, da für die Übermittlung der Zellidentifikationsnummer nur ein vernachlässigbares Zeitintervall der verfügbaren Übertragungszeit benötigt wird.

Darüber hinaus ist durch die vorgeschlagene Lösung keine wesentliche Änderung der gegenwärtig verwendeten Übertragungsstandards notwendig. Mobile Endgeräte, welche die erfindungsgemäßen Merkmale nicht unterstützen, können auf normale Weise weiter betrieben werden und sind weiterhin im Stande, Übertragungssignale zu empfangen oder mit anderen Mobilfunksystemen zu kommunizieren.

Die Erfindung betrifft des Weiteren ein Netzwerk in einem Mobilfunksystem, welches geeignet ist, von einem erfindungsgemäßen mobilen Endgerät Zellidentifikationsnummern zu empfangen und/oder in einem erfindungsgemäßen Verfahren verwendet zu werden.

In einer bevorzugten Ausführungsform ist das Netzwerk dazu geeignet, empfangene Zellidentifikationsnummern für eine Bestimmung des Aufenthaltsortes des mobilen Endgerätes zu verwenden. Dem Netzwerk ist dabei bekannt, welche Zellen welches Gebiet versorgen, so dass eine Mobilfunkzelle eindeutig einer Zelle, welche mit paketorientierten Rundfunksignalen versorgt wird, zugeordnet werden kann.

Die Erfindung wird im Folgenden unter Hinweis auf die beigefügte Zeichnung anhand eines Ausführungsbeispieles näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigt:

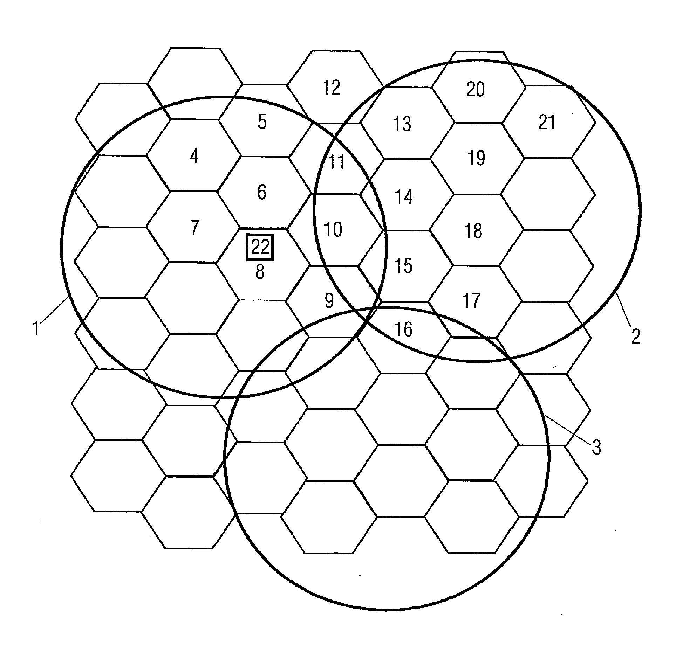

- Figur 1: eine schematische Darstellung einer Zellstruktur eines UMTS-Mobilfunk- und DVB-T-Netzes.

Figur 1 zeigt schematisch eine Überlagerung eines UMTS-Netzes mit einer Vielzahl hexagonaler Zellen, von denen die Zellen 4 bis 21 beispielhaft mit Bezugsziffern gekennzeichnet wurden, und einem DVB-Netz mit den drei Zellen 1, 2 und 3. In der Mitte jeder UMTS-zelle befindet sich eine Mobilfunk-Basisstation (nicht eingezeichnet). In der Mitte jeder DVB-Zelle befindet sich ein DVB-T-Sender (nicht eingezeichnet).
Das Mobilfunkgerät 22 kann sowohl UMTS-, als auch DVB-Signale empfangen. Das Mobilfunkgerät 22 befindet sich in der UMTS-Zelle 8 und ist im UMTS-Netz angemeldet, d.h. es besteht eine logische Verbindung zu der Mobilfunk-Basisstation der UMTS-Zelle 8.

Gemäß dem UMTS-Standard wird in jeder UMTS-Mobilfunkzelle die gleiche Trägerfrequenz verwendet. Die Trennung von Nutzern und Zellen erfolgt dabei über aufgeprägte Codes. Das DVB-Netz ist standardkonform als Ein-Frequenz-Netzwerk SFN (Single Frequency Network) ausgebildet, das heißt, die gleichen Daten werden innerhalb jeder Zelle auf der gleichen Frequenz gesendet.

Das Mobilfunkgerät 22 empfängt von dem DVB-Sender der Zelle 1 DVB-T-Signale. Dazu werden zuerst DVB-T-Kontrollinformationen empfangen, um die Empfangsparameter wie Modulationsart oder Codierung zu bestimmen. Mit diesen Kontrollinformationen wird auch eine DVB-T-Zellidentifikation (CELL ID) empfangen, welche den DVB-T-Sender der Zelle 1 eindeutig kennzeichnet. Das Mobilfunk-Endgerät sendet sodann diese DVB-T-Zellidentifikationsnummer zusammen mit einer Protokoll-Nachricht, dass sich das Mobilfunkgerät ab sofort im DVB-Modus befindet, an das UMTS-Netzwerk. Folglich wird das Location Update ab diesem Zeitpunkt mit Hilfe der Zellidentifikationsnummern ausgeführt.

Durch die Netzplanung, sowohl des DVB-T-Netzes als auch des UMTS-Netzes, ist es dem UMTS-Netzwerk bekannt, welche Zelle welches Gebiet versorgt. Somit können nun DVB-T-Zellen einer Mobilfunkzelle zugeordnet werden.

Das Mobilfunkgerät 22 befindet sich in der DVB-T-Zelle 1, welche unter Anderem die Mobilfunkzellen 4 bis 11 enthält. Somit ist die Position des Mobilfunkgerätes dem UMTS-Netzwerk über die DVB-T-Zelle 1 bekannt.

Bewegt sich das Mobilfunkgerät aus der UMTS-Zelle 8 über die UMTS-Zelle 10 zu der UMTS-Zelle 14, so findet irgendwo in der UMTS-Zelle 10 eine Art Handover statt, bei dem nun anstelle des DVB-T-Signals aus der Zelle 1 das DVB-T-Signal aus der Zelle 2 empfangen wird. Dies wird von dem Mobilfunkgerät 22 dadurch erkannt, dass sich die Zellidentifikationsnummer (Cell ID) des DVB-T-Signals geändert hat. Folglich wird eine kurze Verbindung zu dem Mobilfunknetz aufgebaut, um diese geänderten Informationen an das UMTS-Netzwerk zu senden.

Vorteilhaft ist, dass während des Empfangs eines Rundfunkdienstes, wie beispielsweise DVB-T oder DAB, der Aufenthaltsbereich, das heißt die Location Area, innerhalb des Mobilfunknetzes über die DVB-T-/DAB-Zellen eindeutig bestimmt werden kann. Dadurch entfallen für das Mobilfunkgerät 22 notwendige Messungen, um die aktuelle Aufenthaltszelle innerhalb des UMTS-Netzes zu bestimmen, wodurch der Empfang des Rundfunksignals mit den vorstehend erwähnten Auswirkungen für die Wiedergabe des Audio-/Video-Signals, nicht unterbrochen werden muss.

## Patentansprüche

1. Mobiles Endgerät (22), insbesondere Mobilfunkgerät, für ein Mobilfunksystem, aufweisend
Mittel zur Kommunikation in dem Mobilfunksystem, und Mittel zum Empfang paketorientierter Rundfunksignale, wobei das mobile Endgerät dafür ausgelegt ist,
a) eine erste Zellidentifikationsnummer von einem ersten Sender paketorientierter Rundfunksignale zu empfangen, **dadurch gekennzeichnet, dass**
b) diese erste Zellidentifikationsnummer an das Netzwerk des Mobilfunksystems für eine Aktualisierung des Aufenthaltsortes des mobilen Endgerätes innerhalb des Netzwerks des Mobilfunksystems zu übermitteln,
c) während des Empfangs paketorientierter Rundfunksignalen eine Aktualisierung des Aufenthaltsortes des mobilen Endgerätes innerhalb des Netzwerks des Mobilfunksystems ausschließlich über ausgesendete Zellidentifikationsnummern zu signalisieren.

2. Mobiles Endgerät gemäß Anspruch 1,
welches geeignet ist, dem Netzwerk des Mobilfunksystems zusammen mit der Zellidentifikationsnummer eine Protokoll-Nachricht zu übermitteln, welche dem Netzwerk anzeigt, dass das mobile Endgerät gerade mindestens ein paketorientiertes Rundfunksignal empfängt.

3. Mobiles Endgerät gemäß einem der vorhergehenden Ansprüche, welches geeignet ist, eine zweite Zellidentifikationsnummer von einem zweiten Sender paketorientierter Rundfunksignale zu empfangen und diese zweite Zellidentifikationsnummer an das Netzwerk des Mobilfunksystems für eine Aktualisierung des Aufenthaltsortes des mobilen Endgerätes (22) zu senden.

4. Mobiles Endgerät gemäß Anspruch 3,
welches geeignet ist, während mindestens eines Zeitschlitzes, während dessen keine paketorientierten Rundfunksignale empfangen werden, die zweite Zellidentifikationsnummer an das Netzwerk des Mobilfunksystems zu senden.

5. Mobiles Endgerät gemäß einem der vorhergehenden Ansprüche, welches geeignet ist, die erste und/oder die zweite Zellidentifikationsnummer zusammen mit Empfangsparametern für die paketorientierten Rundfunksignale zu empfangen.

6. Mobiles Endgerät gemäß einem der vorhergehenden Ansprüche, bei dem es sich bei den paketorientierten Rundfunksignalen um DVB- und/oder DAB-Signale handelt.

7. Mobiles Endgerät gemäß einem der vorhergehenden Ansprüche, welches nur eine Mobilfunk-Sende-/Empfangsvorrichtung für die Mittel zur Kommunikation in einem Mobilfunksystem und die Mittel zum Empfang paketorientierter Rundfunksignale aufweist.

8. Verfahren zur Kommunikation in einem Mobilfunksystem und zum Empfang paketorientierter Rundfunksignale in einem mobilen Endgerät (22), insbesondere in einem Mobilfunkgerät, welches in dem Mobilfunksystem kommuniziert, bei dem
a) eine erste Zellidentifikationsnummer von einem ersten Sender paketorientierter Rundfunksignale empfangen wird, **dadurch gekennzeichnet, dass**
b) diese erste Zellidentifikationsnummer an das Netzwerk des Mobilfunksystems für eine Aktualisierung des Aufenthaltsortes des mobilen Endgerätes innerhalb des Netzwerks des Mobilfunksystems übermittelt wird, und
c) das mobile Endgerät (22) während des Empfangs paketorientierter Rundfunksignale eine Aktualisierung des Aufenthaltsortes des mobilen Endgerätes (22) innerhalb des Netzwerks des Mobilfunksystems ausschließlich über ausgesendete Zellidentifikationsnummern signalisiert.

9. Verfahren gemäß Anspruch 10,
bei dem dem Netzwerk des Mobilfunksystems zusammen mit der Zellidentifikationsnummer eine Protokoll-Nachricht übermittelt wird, welche dem Netzwerk anzeigt, dass das mobile Endgerät gerade mindestens ein paketorientiertes Rundfunksignal empfängt.

10. Verfahren gemäß einem der Ansprüche 8 oder 9,
bei dem das mobile Endgerät (22) eine zweite Zellidentifikationsnummer von einem zweiten Sender paketorientierter Rundfunksignale empfängt und es diese zweite Zellidentifikationsnummer an das Netzwerk des Mobilfunksystems für eine Aktualisierung des Aufenthaltsortes des mobilen Endgerätes (22) sendet.

11. Verfahren gemäß Anspruch 10,
bei dem das mobile Endgerät (22) während mindestens eines Zeitschlitzes, während dessen keine paketorientierten Rundfunksignale empfangen werden, die zweite Zellidentifikationsnummer an das Netzwerk des Mobilfunksystems sendet.

12. Verfahren gemäß einem der Ansprüche 8 bis 11,
bei dem das mobile Endgerät (22) die erste und/oder die zweite Zellidentifikationsnummer zusammen mit Empfangsparametern für die paketorientierten Rundfunksignale empfängt.

13. Verfahren gemäß einem der Ansprüche 8 bis 12,
bei dem es sich bei den paketorientierten Rundfunksignalen um DVB- und/oder DAB-Signale handelt.

14. Verfahren gemäß einem der Ansprüche 8 bis 13,
bei dem eine einzige Mobilfunk-Sende-/Empfangsvorrichtung in dem mobilen Endgerät (22) für die Kommunikation in dem Mobilfunksystem und den Empfang der paketorientierten Rundfunksignale vorgesehen ist.

15. Netzwerk in einem Mobilfunksystem, welches Mittel zum Bewerkstelligen von Kommunikation in dem Mobilfunksystem durch ein mobiles Endgerät (22) gemäß einem der Ansprüche 1 bis 7 aufweist und welches Mittel aufweist zum Empfangen von Zellidentifikationsnummern und/oder zur Befähigung, in einem Verfahren gemäß einem der Ansprüche 8 bis 14 verwendet zu werden.

16. Netzwerk gemäß Anspruch 15, welches Mittel aufweist zur Befähigung, empfangene Zellidentifikationsnummern für eine Bestimmung des Aufenthaltsortes des mobilen Endgerätes (22) zu verwenden.

## Claims

1. Mobile terminal (22), in particular a mobile radio device, for a mobile radio system, having
means for communicating in the mobile radio system and
means for receiving packet-oriented broadcast signals, the mobile terminal being designed
a) to receive a first cell identification number from a first transmitter of packet-oriented broadcast signals, **characterized in that**
b) said first cell identification number is transmitted to the network of the mobile radio system for a location update for the mobile terminal within the network of the mobile radio system,
c) a location update for the mobile terminal within the network of the mobile radio system is signaled solely by way of transmitted cell identification numbers during the receipt of packet-oriented broadcast signals.

2. Mobile terminal according to claim 1,
which is suitable for transmitting a protocol message to the network of the mobile radio system together with the cell identification number, said protocol message indicating to the network that the mobile terminal has just received at least one packet-oriented broadcast signal.

3. Mobile terminal according to one of the preceding claims,
which is suitable for receiving a second cell identification number from a second transmitter of packet-oriented broadcast signals and sending said second cell identification number to the network of the mobile radio system for a location update for the mobile terminal (22).

4. Mobile terminal according to claim 3, which is suitable for sending the second cell identification number to the network of the mobile radio system during at least one time slot, during which no packet-oriented broadcast signals are received.

5. Mobile terminal according to one of the preceding claims,
which is suitable for receiving the first and/or second cell identification number together with receive parameters for the packet-oriented broadcast signals.

6. Mobile terminal according to one of the preceding claims,
wherein the packet-oriented broadcast signals are DVB and/or DAB signals.

7. Mobile terminal according to one of the preceding claims,
which only has one mobile radio transmit/receive device for the means for communicating in a mobile radio system and the means for receiving packet-oriented broadcast signals.

8. Method for communicating in a mobile radio system and for receiving packet-oriented broadcast signals in a mobile terminal (22), in particular in a mobile radio device, which communicates in the mobile radio system, wherein
a) a first cell identification number is received from a first transmitter of packet-oriented broadcast signals, **characterized in that**
b) said first cell identification number is transmitted to the network of the mobile radio system for a location update for the mobile terminal within the network of the mobile radio system,
c) the mobile terminal (22) signals a location update for the mobile terminal (22) within the network of the mobile radio system solely by way of transmitted cell identification numbers during the receipt of packet-oriented broadcast signals.

9. Method according to claim 10,
wherein a protocol message is transmitted to the network of the mobile radio system together with the cell identification number, said protocol message indicating to the network that the mobile terminal has just received at least one packet-oriented broadcast signal.

10. Method according to one of claims 8 or 9,
wherein the mobile terminal (22) receives a second cell identification number from a second transmitter of packet-oriented broadcast signals and sends said second cell identification number to the network of the mobile radio system for a location update for the mobile terminal (22).

11. Method according to claim 10,
wherein the mobile terminal (22) sends the second cell identification number to the network of the mobile radio system during at least one time slot, during which no packet-oriented broadcast signals are received.

12. Method according to one of claims 8 to 11,
wherein the mobile terminal (22) receives the first and/or second cell identification number together with receive parameters for the packet-oriented broadcast signals.

13. Method according to one of claims 8 to 12,
wherein the packet-oriented broadcast signals are DVB and/or DAB signals.

14. Method according to one of claims 8 to 13,
wherein a single mobile radio transmit/receive device is provided in the mobile terminal (22) for communicating in the mobile radio system and for receiving the packet-oriented broadcast signals.

15. Network in a mobile radio system, which comprises means for effecting communication in the mobile radio system by means of a mobile terminal (22) according to one of claims 1 to 7 and which comprises means for receiving cell identification numbers and/or means of qualifying its use in a method as claimed in one of claims 8 to 14.

16. Network according to claim 15, which comprises means of qualifying the use of received cell identification numbers to determine the location of the mobile terminal (22).

## Revendications

1. Terminal mobile (22), et plus particulièrement appareil de radiotéléphonie mobile, pour un système de radiotéléphonie mobile, comportant :
- des moyens pour communiquer dans le système de radiotéléphonie mobile et des moyens pour recevoir des signaux de radiodiffusion orientés paquets, le terminal mobile étant conçu pour :
a) recevoir un premier numéro d'identification de cellule d'un premier émetteur de signaux de radiodiffusion orientés paquets, **caractérisé en ce que** le terminal mobile est conçu pour :
b) transmettre ce premier numéro d'identification de cellule au réseau du système de radiotéléphonie mobile pour une mise à jour de la localisation du terminal mobile dans le réseau du système de radiotéléphonie mobile ;
c) signaler, pendant la réception de signaux de radiodiffusion orientés paquets, une mise à jour de la localisation du terminal mobile dans le réseau du système de radiotéléphonie mobile exclusivement via des numéros d'identification de cellule émis.

2. Terminal mobile selon la revendication 1, lequel est adapté pour transmettre au réseau du système de radiotéléphonie mobile, conjointement avec le numéro d'identification de cellule, un message de protocole qui signale au réseau que le terminal mobile est en train de recevoir au moins un signal de radiodiffusion orienté paquets.

3. Terminal mobile selon l'une des revendications précédentes, lequel est adapté pour recevoir un deuxième numéro d'identification de cellule d'un deuxième émetteur de signaux de radiodiffusion orientés paquets et pour envoyer ce deuxième numéro d'identification de cellule au réseau du système de radiotéléphonie mobile pour une mise à jour de la localisation du terminal mobile (22).

4. Terminal mobile selon la revendication 3, lequel est adapté pour envoyer le deuxième numéro d'identification de cellule au réseau du système de radiotéléphonie mobile pendant au moins un créneau temporel pendant lequel n'est reçu aucun signal de radiodiffusion orienté paquets.

5. Terminal mobile selon l'une des revendications précédentes, lequel est adapté pour recevoir le premier et/ou le deuxième numéro d'identification de cellule conjointement avec des paramètres de réception pour les signaux de radiodiffusion orientés paquets.

6. Terminal mobile selon l'une des revendications précédentes, dans lequel les signaux de radiodiffusion orientés paquets sont des signaux DVB et/ou DAB.

7. Terminal mobile selon l'une des revendications précédentes, lequel comporte uniquement un dispositif émetteur/récepteur de radiotéléphonie mobile pour les moyens de communication dans un système de radiotéléphonie mobile et les moyens de réception de signaux de radiodiffusion orientés paquets.

8. Procédé de communication dans un système de radiotéléphonie mobile et de réception de signaux de radiodiffusion orientés paquets dans un terminal mobile (22), en particulier dans un appareil de radiotéléphonie mobile qui communique dans le système de radiotéléphonie mobile, dans lequel :
a) un premier numéro d'identification de cellule est reçu au départ d'un premier émetteur de signaux de radiodiffusion orientés paquets, **caractérisé en ce que** :
b) ce premier numéro d'identification de cellule est transmis au réseau du système de radiotéléphonie mobile pour une mise à jour de la localisation du terminal mobile dans le réseau du système de radiotéléphonie mobile ; et
c) le terminal mobile (22), pendant la réception de signaux de radiodiffusion orientés paquets, signale une mise à jour de la localisation du terminal mobile (22) dans le réseau du système de radiotéléphonie mobile exclusivement via des numéros d'identification de cellule émis.

9. Procédé selon la revendication 10, dans lequel est transmis au réseau du système de radiotéléphonie mobile, conjointement avec le numéro d'identification de cellule, un message de protocole qui signale au réseau que le terminal mobile est en train de recevoir au moins un signal de radiodiffusion orienté paquets.

10. Procédé selon l'une des revendications 8 ou 9, dans lequel le terminal mobile (22) reçoit un deuxième numéro d'identification de cellule d'un deuxième émetteur de signaux de radiodiffusion orientés paquets et envoie ce deuxième numéro d'identification de cellule au réseau du système de radiotéléphonie mobile pour une mise à jour de la localisation du terminal mobile (22).

11. Procédé selon la revendication 10, dans lequel le terminal mobile (22) envoie le deuxième numéro d'identification de cellule au réseau du système de radiotéléphonie mobile pendant au moins un créneau temporel pendant lequel n'est reçu aucun signal de radiodiffusion orienté paquets.

12. Procédé selon l'une des revendications 8 à 11, dans lequel le terminal mobile (22) reçoit le premier et/ou le deuxième numéro d'identification de cellule conjointement avec des paramètres de réception pour les signaux de radiodiffusion orientés paquets.

13. Procédé selon l'une des revendications 8 à 12, dans lequel les signaux de radiodiffusion orientés paquets sont des signaux DVB et/ou DAB.

14. Procédé selon l'une des revendications 8 à 13, dans lequel est prévu un unique dispositif émetteur/récepteur de radiotéléphonie mobile dans le terminal mobile (22) pour la communication dans le système de radiotéléphonie mobile et la réception des signaux de radiodiffusion orientés paquets.

15. Réseau dans un système de radiotéléphonie mobile, lequel comporte des moyens pour réaliser une communication dans le système de radiotéléphonie mobile par un terminal mobile (22) selon l'une des revendications 1 à 7 et lequel comporte des moyens pour recevoir des numéros d'identification de cellule et/ou pour le rendre apte à être utilisé dans un procédé selon l'une des revendications 8 à 14.

16. Réseau selon la revendication 15, lequel comporte des moyens pour le rendre apte à utiliser des numéros d'identification de cellule reçus pour déterminer la localisation du terminal mobile (22).
